# EUROPEAN PATENT SPECIFICATION

(11) **EP 3 131 381 B1**
(45) Date of publication and mention of the grant of the patent: **22.02.2023**
(21) Application number: 15715774.4
(22) Date of filing: 17.04.2015
(51) Int. Cl.: A01C 7/04

(54) **SOWING ELEMENT FOR PNEUMATIC PRECISION SEED DRILLS**
SÄELEMENT FÜR PNEUMATISCHE PRÄZISIONSSÄMASCHINEN
ÉLÉMENT D'ENSEMENCEMENT POUR SEMOIRS DE PRÉCISION PNEUMATIQUES

(30) Priority: 17.04.2014 IT PD20140106
(43) Date of publication of application: 22.02.2017
(73) Proprietor: Maschio Gaspardo S.p.A., 35011 Campodarsego (PD) (IT)
(72) Inventor: DONADON, Gianfranco, I-35011 Campodarsego (PD) (IT)
(74) Representative: Locas, Davide
(86) International application number: PCT/EP2015/058401
(87) International publication number: WO 2015/158900

(56) References cited:
- EP-A1- 1 920 647
- WO-A1-00/64234
- WO-A1-2012/062876

## Description

The present invention relates to a sowing element for pneumatic precision seed drills, of the type including the features set out in the preamble of the main claim.

A sowing element including those features is known from EP 1 920 647 A1. Another similar sowing element is known from WO2012062876 from the same Applicant.

During the construction of sowing elements for pneumatic precision seed drills, it is known to provide a pneumatic manifold, in which there is defined an annular chamber which is not completely closed on itself and which serves to generate a pressure difference between the two opposing faces of a disc distributor which is provided at the periphery with one or more rings of holes. The seed to be distributed is brought into contact with the face of the disc opposite the annular chamber and becomes attached at that location at the holes as a result of the effect of the pressure differential. The seed is released when the disc, caused to rotate about the individual axis thereof, exceeds the angle covered by the annular chamber so that the pressure differential between the opposing faces thereof ends.

In order to improve the pneumatic tightness between the disc and the annular chamber, there is provided a gasket which is fixed in the pneumatic manifold by means of a disc-like plate.

It may be the case, however, that this gasket, as with all components which are subjected to relative slippage, suffers progressive wear at the side facing the disc. That wear is accelerated by the fact that the central portion of the disc is normally subjected to the pneumatic pressure reduction established in the pressure manifold and the disc is therefore pressed by the greater pressure established in the opposing chamber for containing the seed against the gasket. When the wear of the gasket reaches the limit value, there begins metal contact involving a slipping action between the disc and the metal plate which retains the gasket in the manifold. That leads to both damage to the surface of the disc during slipping contact and an increased resistance to rotation of the disc (hardening) which requires, owing to the effect of the wear, a greater torque in order to be caused to rotate. The effect is obviously detrimental in all cases but is even more detrimental when the rotation of the distributor disc is brought about, as in more recent applications, by means of an electric motor of limited torque. In addition to the superficial damage to the disc, there may be brought about a reduction in the speed of rotation thereof, which in turn will result in slowing the sowing machine, and damage to and potential overheating of the actuation motors of the discs and a drop in performance of the machine itself.

On the other hand, the wear of the gaskets is not immediately evident. In order to promote the timely replacement thereof, when the gasket appears to be used and it is therefore easy for the use of the seed drill to continue until it is possible to hear the increased noisiness of the sowing elements owing to the slipping action of the discs on the plates for retaining the gasket.

Against this background, an object of the invention is to provide a sowing element which is structurally and functionally configured to overcome the technical problems resulting from the wear of the gasket so as to prevent the discs from becoming damaged and/or the entire functionality of the sowing element from becoming compromised.

Furthermore, an object of the invention is to provide a sowing element which is particularly suitable for operation at relatively low power and in particular electrical operation. In that context and scope, an object of the invention is to provide a sowing element which is capable of demonstrating the limits of wear of the gasket and which is preferably suitable for improving the cleaning of the distributor discs so as to attenuate the friction between the disc and the gasket itself.

This problem is solved and those objects are achieved by the invention by means of a sowing element which is constructed in accordance with the appended claims.

The features and advantages of the invention will be better appreciated from the following detailed description of a preferred embodiment thereof which is illustrated by way of non-limiting example with reference to the appended drawings, in which:

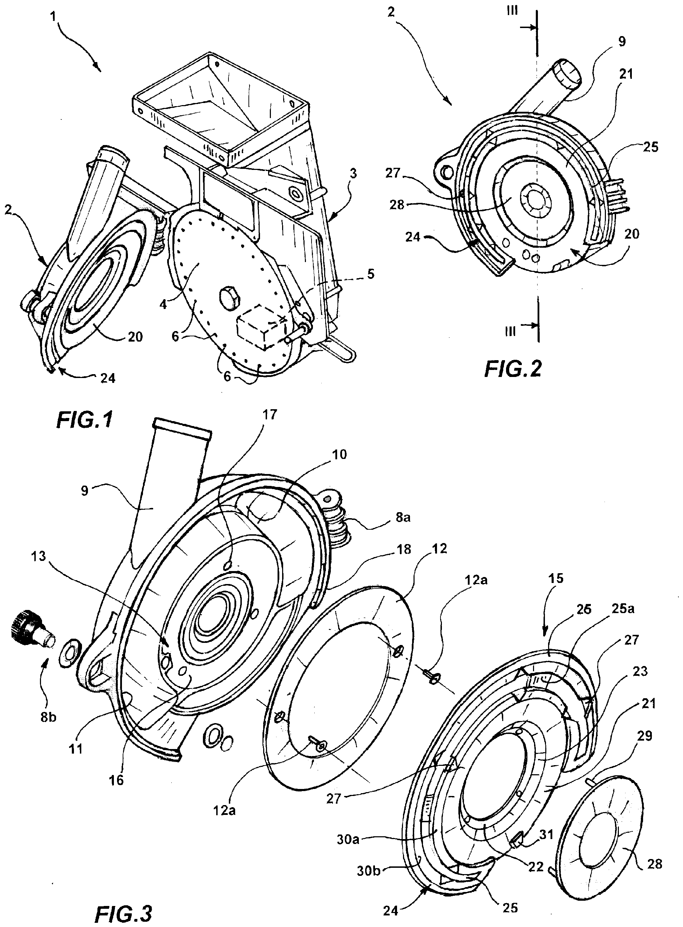

- Figure 1 is a partial perspective view of a sowing element according to the invention;
- Figure 2 is a partial perspective view of a detail of the sowing element of Figure 1;
- Figure 3 is an exploded perspective view of the element of Figure 2;

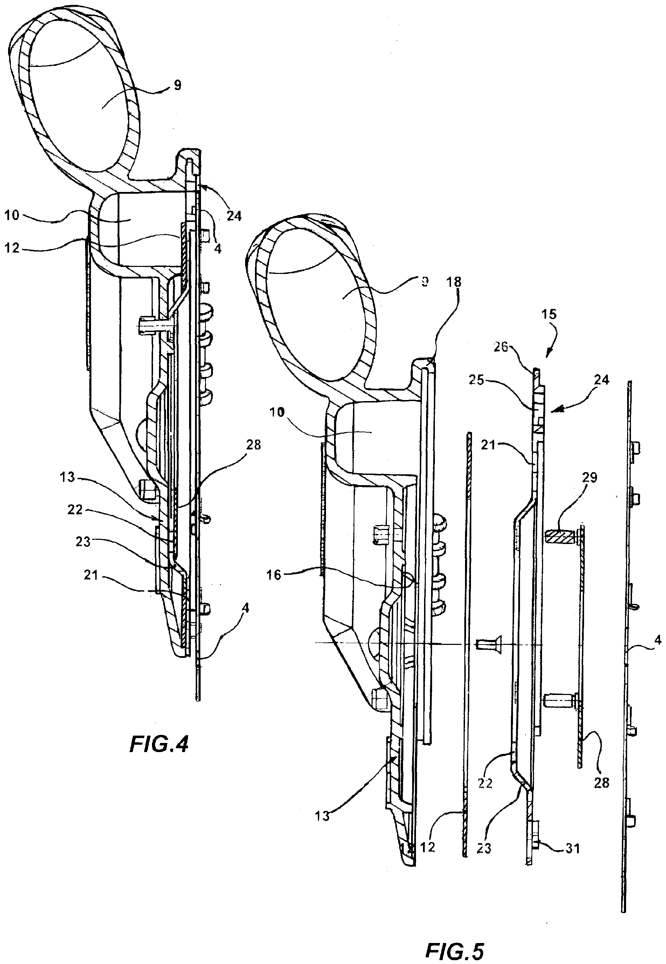

- Figure 4 is a cross-section in accordance with the plane III-III of the element of Figure 2 associated with a disc distributor; and
- Figure 5 is an exploded cross-section corresponding to Figure 4.

In the Figures, there is generally designated 1 a sowing element including a pneumatic manifold 2 and a seed distributor 3. The seed distributor 3 in turn comprises a disc distributor 4 which separates a seed receiving chamber 5 from the manifold 2. There is formed in the manifold 2 an annular chamber 10 which is not completely closed on itself and which serves to generate a pressure difference between the two opposing faces of the disc distributor 4 at a lower pressure (normally generated by means of suction into the manifold 2) at the face directed towards the annular chamber 10 with respect to the pressure which exists in the seed receiving chamber 5. The disc distributor 4 is provided at its periphery with one or more rings of holes 6 so that the seed to be distributed becomes attached to the disc 4 at the holes 6 owing to the effect of the pressure differential between the manifold 2 and the seed distributor 3.

The pneumatic manifold 2 is hinged by means of a hinge 8a and can be fixed by means of a handwheel 8b to the distributor 3 so as to be able to pivot away from and towards the disc distributor 4 in order to afford access to the set of internal components of the sowing element. It is provided with an intake duct 9 which communicates with the annular chamber 10, the chamber being extended by a formation with a circular sector over a predetermined circumferential segment. The annular chamber 10 has an opening 11 whose cross-section is reduced by a reduction member 12 which is in the form of a circular crown and which is fixed by means of screws 12a to the body 13 of the pneumatic manifold 2 and which acts as a support for a gasket 15 which is interposed between a rotary surface of the disc distributor 4 and a stationary surface of the pneumatic manifold 2. In addition, there is defined in the body 13 of the manifold 2 a central seat 16 which is recessed with respect to the plane of the reduction member 12 and which has through-holes 17 and a flange 18 which surrounds the annular chamber 10, extending over a short portion beyond the circumferentially opposing ends thereof. That flange 18 is interrupted in the region of a portion 19 for the reasons set out below.

The gasket 15 comprises a central disc-like portion 20 which includes a first and a second flange 21, 22 which are connected to each other by a conical portion 23 so that the two flanges are in planes which are offset but parallel. The first flange 21 of the portion 20 is partially peripherally surmounted by a sealing sector 24 which is raised with respect to the first flange 21 of the central portion and in which there opens an annular passage 25 which, when the sowing element is assembled, is arranged in the region of the opening 11 of the annular chamber 10.

The sealing sector 24 has, at the outer circumferential boundary, another flange 26 which is located in practice in radial continuation of the first flange 21 only over the circumferential extent of the sealing sector 24. There are provided between opposing sides of the annular passage 25 bridges 25a which serve to reinforce the gasket 15 in order to facilitate the movement and the assembly thereof. There are provided on the surfaces 30a, b of the sealing sector 24 facing the disc distributor 4 impressions 27 which act both as wear indicators of the sealing sector 24 and as scraping members for cleaning the disc distributor 4. In order to fix the gasket 15 to the manifold 2, there is provision for a plate 28 having screws 29 which are received in the holes 17 of the seat 16 in order to press the second flange 22 in the seat 16. It may be noted that the sealing sector 24 is completely interrupted beyond the circumferential ends thereof, that is to say, both the surfaces 30a, b are interrupted except for a plug 31, so as to form a discharge 32 which serves to maintain atmospheric pressure between the gasket 15 and the disc distributor 4 for the purpose of preventing any reduced pressure established in the pneumatic manifold 2 from being able to apply a pneumatic return action of the disc distributor 4 towards the gasket 15, causing anticipated wear of the respective contact surfaces.

The operation of the sowing element, with regard to the actuation of the disc distributor 4 and the selection of the seed, is based on the retention as a result of a pneumatic effect of grains of seed in the region of the holes 6 of the disc distributor 4 when the disc 4 is rotated inside the seed chamber. The grains of seed remain attached to the disc distributor 4 until the corresponding holes 6 pass in correspondence with the annular chamber 10 owing to the effect of the pressure difference between the opposing faces of the disc itself. When a hole 6 which carries a grain of seed moves past the sealing sector 24, moving into the region of the discharge 32, the pressure differential ends and the grain is released in order to be conveyed into a suitable furrow of the sowing ground.

The depressurizing of the surface of the gasket 15 corresponding to the two flanges 21, 22 causes the pressure on the central portion of the disc distributor 4 to be atmospheric pressure, thereby preventing a lower pressure from causing a pneumatic load on the disc 4, tending to move it towards the gasket 15. The recessing of the fixing plate 28 of the gasket 15 with respect to the sealing sector 24, even in the presence of great wear of the sealing sector 24, makes it impossible for metallic sliding contact to be produced between the disc distributor 4 and metal portions of the sowing element. Furthermore, the presence of wear indicators makes it easier to check the gasket at a glance in order to promote the replacement thereof when it is worn.

## Claims

1. A sowing element for pneumatic precision seed drills, comprising a gasket (15) interposed between a stationary surface of a pneumatic manifold (2) and a rotating surface of a disc distributor (4), the gasket (15) comprising a central portion (20) which is partially peripherally surmounted by a sealing sector (24) in which an annular passage (25) opens, fastening means (28, 29) for the gasket being provided between the central portion (20) of the gasket and the manifold (2) of the sowing element, wherein the central portion (20) comprises a first and a second flange (21, 22) which are interconnected in offset planes, the first flange (21) being interposed between the second flange (22) and the sealing sector (24), the fastening means (28, 29) being provided between the second flange (22) and the manifold (2) wherein the first and second flange (21, 22) are in offset parallel planes, the planes of the first and second flange (21, 22) being offset at increasing distances from a sealing surface (30a, b) of the sealing sector (24) and wherein said first and second flange (21, 22) are connected to each other by a conical portion (23), **characterised in that** said first flange (21) connects said sealing sector (24) to said conical portion (23) and contacts said sealing sector (24) and said conical portion (23) at radially opposing sides.

2. A sowing element according to claim 1, wherein the sealing sector (24) projects with respect to the first flange (21) on the opposite side to the second flange (22).

3. A sowing element according to any one of the preceding claims, wherein the stationary surface of the manifold is at least partially received in the manifold (2).

4. A sowing element according to claim 3, wherein the stationary surface of the manifold comprises a support ring (12) for the first flange (21) of the gasket (15).

5. A sowing element according to claim 4, wherein at least a portion of the support ring (12) extends radially under the innermost of projecting surfaces of the sealing sector (24).

6. A sowing element according to any one of the preceding claims, wherein the fastening means comprise a disc-like support (28).

7. A sowing element according to any one of the preceding claims, wherein the sealing sector (24) is interrupted, in some regions at least, in the portion of the manifold (2) in which an annular chamber (10) that serves to generate the pressure is not present, so as to equalize the pressure between the disc distributor (4) and the gasket (15) in the portion of the disc (4) that is located radially farther inward than the sealing sector (24).

8. A sowing element according to any one of the preceding claims, wherein notches (27) are provided in the sealing surface (30a, b) of the sealing sector (24) for the cleaning of the disc distributor (4).

9. A sowing element according to any one of the preceding claims, wherein wear indicators (27) indicating the wear of the gasket (15) are provided on the sealing surface (30a, b) of the sealing sector (24).

10. A sowing element according to any one of the preceding claims, wherein, the plane of said first flange (21) develops from said conical portion (23) to said sealing sector (24) partially peripherally surmounting the first flange (21).

## Patentansprüche

1. Säelement für pneumatische Präzisionssämaschinen mit einer Dichtung (15), die zwischen einer festen Oberfläche eines pneumatischen Verteilers (2) und einer rotierenden Oberfläche eines Scheibenverteilers (4) angeordnet ist, wobei die Dichtung (15) einen zentralen Abschnitt (20), der teilweise von einem Dichtungssektor (24) in Umfangsrichtung überragt wird, in den ein ringförmiger Durchgang (25) mündet, und Befestigungsmittel (28, 29) für die Dichtung aufweist, die zwischen dem zentralen Abschnitt (20) der Dichtung und dem Verteiler (2) des Säelements vorgesehen sind, wobei der zentrale Abschnitt (20) einen ersten und einen zweiten Flansch (21, 22) aufweist, die in versetzten Ebenen miteinander verbunden sind, wobei der erste Flansch (21) zwischen dem zweiten Flansch (22) und dem Dichtungssektor (24) angeordnet ist, die Befestigungsmittel (28, 29) zwischen dem zweiten Flansch (22) und dem Verteiler (2) vorgesehen sind, wobei der erste und der zweite Flansch (21, 22) in versetzten parallelen Ebenen liegen, wobei die Ebenen des ersten und zweiten Flansches (21, 22) in zunehmenden Abständen von einer Dichtfläche (30a, b) des Dichtungssektors (24) versetzt sind und wobei der erste und der zweite Flansch (21, 22) durch einen konischen Abschnitt (23) miteinander verbunden sind, **dadurch gekennzeichnet, dass** der erste Flansch (21) den Dichtungssektor (24) mit dem konischen Abschnitt (23) verbindet und den Dichtungssektor (24) und den konischen Abschnitt (23) an radial gegenüberliegenden Seiten kontaktiert.

2. Säelement nach Anspruch 1, wobei der Dichtungssektor (24) in Bezug auf den ersten Flansch (21) auf der dem zweiten Flansch (22) gegenüberliegenden Seite hervorsteht.

3. Säelement nach einem der vorhergehenden Ansprüche, wobei die stationäre Fläche des Verteilers zumindest teilweise im Verteiler (2) aufgenommen ist.

4. Säelement nach Anspruch 3, wobei die stationäre Fläche des Verteilers einen Stützring (12) für den ersten Flansch (21) der Dichtung (15) aufweist.

5. Säelement nach Anspruch 4, wobei sich zumindest ein Abschnitt des Stützrings (12) radial unter die innerste der hervorstehenden Flächen des Dichtungssektors (24) erstreckt.

6. Säelement nach einem der vorhergehenden Ansprüche, wobei die Befestigungsmittel einen scheibenförmigen Träger (28) aufweisen.

7. Säelement nach einem der vorangehenden Ansprüche, wobei der Dichtungssektor (24) zumindest bereichsweise im Abschnitt des Verteilers (2) unterbrochen ist, in dem eine ringförmige Kammer (10), die zur Druckerzeugung dient, nicht vorhanden ist, um den Druck zwischen dem Scheibenverteiler (4) und der Dichtung (15) im Abschnitt der Scheibe (4) auszugleichen, der radial weiter innen als der Dichtungssektor (24) angeordnet ist.

8. Säelement nach einem der vorhergehenden Ansprüche, wobei Kerben (27) in der Dichtfläche (30a, b) des Dichtungssektors (24) zur Reinigung des Scheibenverteilers (4) vorgesehen sind.

9. Säelement nach einem der vorangehenden Ansprüche, wobei auf der Dichtfläche (30a, b) des Dichtungssektors (24) Verschleißindikatoren (27) vorgesehen sind, die den Verschleiß der Dichtung (15) anzeigen.

10. Säelement nach einem der vorhergehenden Ansprüche, wobei sich die Ebene des ersten Flansches (21) vom konischen Abschnitt (23) zum Dichtungssektor (24) entwickelt, der teilweise den ersten Flansch (21) in Umfangsrichtung überragt.

## Revendications

1. Élément d'ensemencement pour semoirs de précision pneumatiques, comprenant un joint d'étanchéité (15) interposé entre une surface stationnaire d'un collecteur pneumatique (2) et une surface rotative d'un disque de distribution (4), le joint d'étanchéité (15) comprenant une portion centrale (20) qui est surmontée de manière partiellement périphérique par un secteur d'étanchéité (24) dans lequel un passage annulaire (25) s'ouvre, des moyens de fixation (28, 29) pour le joint d'étanchéité étant fournis entre la portion centrale (20) du joint d'étanchéité et le collecteur (2) de l'élément d'ensemencement, dans lequel la portion centrale (20) comprend une première et une seconde bride (21, 22) qui sont interconnectées dans des plans décalés, la première bride (21) étant interposée entre la seconde bride (22) et le secteur d'étanchéité (24), les moyens de fixation (28, 29) étant disposés entre la seconde bride (22) et le collecteur (2) dans lequel les première et seconde brides (21, 22) sont dans des plans parallèles décalés, les plans des première et seconde brides (21, 22) étant décalés au niveau de distances croissantes à partir d'une surface d'étanchéité (30a, b) du secteur d'étanchéité (24) et dans lequel lesdites première et seconde brides (21, 22) sont connectées l'une à l'autre par une portion conique (23), **caractérisé en ce que** ladite première bride (21) connecte ledit secteur d'étanchéité (24) à ladite portion conique (23) et entre en contact avec ledit secteur d'étanchéité (24) et ladite portion conique (23) au niveau de côtés radialement opposés.

2. Élément d'ensemencement selon la revendication 1, dans lequel le secteur d'étanchéité (24) fait saillie par rapport à la première bride (21) sur le côté opposé à la seconde bride (22).

3. Élément d'ensemencement selon l'une quelconque des revendications précédentes, dans lequel la surface stationnaire du collecteur est au moins partiellement reçue dans le collecteur (2).

4. Élément d'ensemencement selon la revendication 3, dans lequel la surface stationnaire du collecteur comprend un anneau de support (12) pour la première bride (21) du joint d'étanchéité (15).

5. Élément d'ensemencement selon la revendication 4, dans lequel au moins une portion de l'anneau de support (12) s'étend radialement sous la plus interne des surfaces saillantes du secteur d'étanchéité (24).

6. Élément d'ensemencement selon l'une quelconque des revendications précédentes, dans lequel les moyens de fixation comprennent un support discoïde (28).

7. Élément d'ensemencement selon l'une quelconque des revendications précédentes, dans lequel le secteur d'étanchéité (24) est interrompu, dans certaines régions au moins, dans la portion du collecteur (2) dans laquelle une chambre annulaire (10) qui sert à générer la pression n'est pas présente, de manière à égaliser la pression entre le disque de distribution (4) et le joint d'étanchéité (15) dans la portion du disque (4) qui est située radialement plus loin vers l'intérieur que le secteur d'étanchéité (24).

8. Élément d'ensemencement selon l'une quelconque des revendications précédentes, dans lequel des encoches (27) sont disposées dans la surface d'étanchéité (30a, b) du secteur d'étanchéité (24) pour le nettoyage du disque de distribution (4).

9. Élément d'ensemencement selon l'une quelconque des revendications précédentes, dans lequel des indicateurs d'usure (27) indiquant l'usure du joint d'étanchéité (15) sont disposés sur la surface d'étanchéité (30a, b) du secteur d'étanchéité (24).

10. Élément d'ensemencement selon l'une quelconque des revendications précédentes, dans lequel le plan de ladite première bride (21) se développe à partir de ladite portion conique (23) vers ledit secteur d'étanchéité (24) surmontant de manière partiellement périphérique la première bride (21).
